# EUROPÄISCHE PATENTANMELDUNG

(11) **EP 1 936 877 A1**
(43) Veröffentlichungstag der Anmeldung: **25.06.2008**
(21) Anmeldenummer: 06026250.8
(22) Anmeldetag: 19.12.2006
(51) Int. Cl.: H04L 12/56, H04L 29/06, H04L 29/08

(54) **Verfahren zur teilnehmerspezifischen Vergabe von Übertragungseigenschaften in einem IMS**

(71) Anmelder: Nokia Siemens Networks GmbH & Co. KG, 81541 München (DE)
(72) Erfinder: Kastelewicz, Georg, 10179 Berlin (DE); Hoffmann, Stefan, 14656 Brieselang (DE)

(57) **Zusammenfassung**

Netzwerkressourcen wie Bandbreite und Transport-Übertragungsklasse sollen nicht nur dienstspezifisch, sondern teilnehmerspezifisch vergeben werden können und dies unabhängig vom besuchten Netz. Dadurch sollen für «gold subscribers» bessere Übertragungseigenschaften - genannt Policies - zugewiesen werden können. Dazu wird ein Verfahren zur Vergabe von Policies vorgeschlagen, bei dem
die teilnehmerspezifischen Policies im Home Subscriber Server (HSS) gespeichert sind und dass
i) beim Einbuchen eines Teilnehmers (UE-A, UE-B) in einem besuchten Netz
oder
ii) beim Verbindungsaufbau in einem besuchten Netz die Policies eines Teilnehmers (UE-A, UE-B) zur P-CSCF im besuchten Netz im bestehenden SIP-Meldungsverkehr übertragen wird und zu einer Policy Decision Function (PDF) weitergeleitet wird, die für den vom Teilnehmer (UE-A, UE-B) beanspruchten Dienst Ressourcen des Zugangsnetzes bereit stellt.

## Beschreibung

Die vorliegende Erfindung betrifft ein Verfahren zur teilnehmerspezifischen Vergabe von Übertragungseigenschaften in einem IMS gemäss dem Oberbegriff des Patentanspruches 1.

Im folgenden wird anstelle einer deutschen Nichtfachsprache teilweise eine englischsprachige Fach-Nomenklatur sowie die gängigen Akronyme benutzt, wie z.B.
- IMS: IP Multimedia Subsystem;
- AF: Application Function;
- PDF: Policy Decision Function
usw.

Durch die Verwendung solcher Fachbegriffe aus der Standardisierung und geläufiger Akronyme lassen sich Unklarheiten vermeiden. Eine Liste der verwendeten Akronyme, Abkürzungen und Begriffe am Schluss dieses Dokumentes bildet einen integralen Bestandteil dieser Schrift. Im Rahmen dieser Schrift sind die Begriffe Netz und Netzwerk synonym verwendet. An dieser Stelle wird noch angefügt, dass im 3GPP TS 23.228 Release 7 die PDF in PCRF umbenannt wurde, allerdings ist der Begriff PDF nach wie vor geläufig.

Das IMS wurde im Rahmen des 3GPP Release 5 erstmals standardisiert gemäss TS 23.228 [1] und wird seither in weiteren Release-Stufen erweitert.

Der Zugang zum IMS ist von einer breiten Palette von Access-Technologien aus möglich. Eine besonders wichtige Rolle als Zugangstechnologie spielt der mobile Zugang über GPRS/UMTS, der in der 3GPP auch schon weitgehend standardisiert worden ist.

Da die Übertragungskapazität, insbesondere auf der Luftschnittstelle, eine begrenzte Ressource ist, wird in heutigen Netzen mittels des in TS29.208 [2], TS29.209 [3] standardisierten Verfahrens dafür Sorge getragen, dass Nutzer diese Ressource (z.B. die Bandbreite oder die Transport-Übertragungsklasse) nur in einem ganz bestimmten Umfang nutzen können. Hierzu werden den einzelnen IP Multimedia-Verbindungen (IMS-Sessions) bestimmte Übertragungseigenschaften, sogenannte «Policies», zugeordnet. Diese Policies werden aus den Dienstanforderungen der aufzubauenden IMS sessions wie z.B.
- «Video hohe Qualität»,
- «Video geringe Qualität»,
- «Sprachverbindung allein»
von der Application Function AF, die sich auf der P-CSCF befindet, errechnet und der Policy Decision Function PDF übermittelt. Die Policy Decision Function PDF übermittelt die Policies wiederum an denjenigen Netzknoten, der als Policy Enforcement Function PEF fungiert - z.B. im GPRS/UMTS die GGSN, bei Kabelnetzen das CMTS - und gewährleistet, dass die Nutzung der Ressourcen den zugesagten Umfang nicht überschreitet.

Dieses Vorgehen hat den Mangel, dass es die Policies nur aus den Dienstanforderungen errechnet, die damit also lediglich dienstabhängig sind. Für einen konkreten Dienst sind keine unterschiedlichen Policies für die einzelnen Teilnehmer möglich. Dies ist bei diesem Verfahren auch technisch nicht möglich, da die AF über keine Teilnehmerinformationen verfügt. Jedoch wäre es beispielsweise sinnvoll, einigen ausgewählten oder privilegiert zu behandelnden Kunden/Subscribers «gold-subscribers» für ihre Dienste großzügigere Ressourcennutzung zu gestatten als anderen. Daher werden bei verschiedenen Herstellern sowie in den 3GPP Standardisierungsgremien Überlegungen zu einer sogenannten «IMS subscriber specific Policy Control» angestellt.

Das Problem besteht darin, wie diese teilnehmerspezifischen Policies von der Datenbank SPR, z.B. co-located mit dem HSS, zur PDF gesendet werden. Besonders komplex ist der Fall des IMS-Roamings: Hier befindet sich die Policy Decision Function PDF im besuchten (visited) Netzwerk, die Datenbank mit den Policies jedoch im Heimat-Netzwerk (home network), so dass die Übertragung netzwerkübergreifend erfolgen muß.

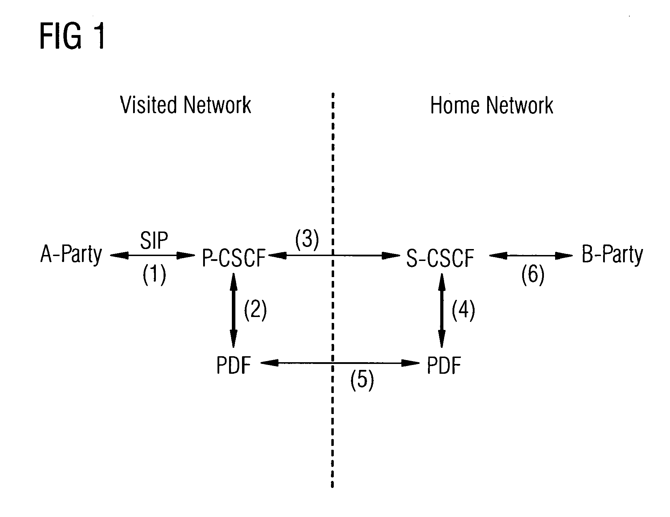

Aus der Standardisierung wurde in der 3GPP ein technischer Vorschlag für einen Teil des Problems, nämlich die Übertragung von teilnehmerspezifischen Policy-Informationen zwischen Netzwerken angesprochen, siehe dazu die Figur 1:
(1) INVITE an P-CSCF
(2) Kommunikation P-CSCF - PDF
(3) INVITE weiter an S-CSCF
(4) Kommunikation S-CSCF - PDF
(5) PDF im Heimatnetz teilt teilnehmerspezifische Informationen der PDF im besuchten Netz mit.
(6) Sessionaufbau fortgesetzt.

Diese geplante Lösung sieht vor, ein neues Interface (5) zwischen den Policy Decision Functions PDFs der beteiligten Netzwerke zu schaffen. Dieser Lösungsvorschlag hat aber entscheidende Nachteile:
- Der Transport der Policy-Informationen im Heimatnetz des Teilnehmers von der Datenbank zur PDF ist nicht beschrieben.
- Ein Interoperator Interface (5) - vgl. Figur 1 - muß auf allen beteiligten Knoten kompatibel implementiert sein, was insbesondere in der Anfangsphase Probleme bereiten könnte.
- Das Interoperator Interface (5) wird aufwendig zu realisieren sein, da es folgende Probleme behandeln können muß:
   i) Routing (z.B. load balancing, Konfiguration);
   ii) Addressing, die Partner-PDF muß gefunden werden, im Falle eines Crashs muß eine Ersatz-PDF gefunden werden);
   iii) Security, das Interoperator Interface 5 muß gesichert sein.

Die der vorliegenden Erfindung zugrunde liegende Aufgabe besteht nun darin, den Nutzungsumfang der Netzwerkressourcen wie Bandbreite und Transport-Übertragungsklasse nicht nur dienstspezifisch, sondern auch teilnehmerspezifisch so zu ermöglichen, dass die Policy-Informationen auf einfache Weise im Heimatnetz wie auch in einem besuchten Netz zur Verfügung stehen, damit einem Teilnehmer die von ihm bezahlten oder ihm zugesicherten Ressourcenanforderungen in jedem Netz zur Verfügung stehen. An dieser Stelle wird darauf hingewiesen, dass dieses Problem der teilnehmerspezifischen Policy-Vergabe auch für den Fall, bei dem der Teilnehmer im Heimatnetz eingebucht ist, noch nicht gelöst ist.

Diese Aufgabe wird für ein Verfahren der eingangs genannten Art durch die im Patentanspruch 1 angegebenen Merkmale gelöst.

Vorteilhafte Ausgestaltungen der Erfindung sind in weiteren Ansprüchen angegeben.

Ein entscheidender Vorteil des erfindungsgemäßen Verfahrens ist, dass es sowohl im Nicht-Roaming Fall als auch für im Roaming-Fall anwendbar ist: Es ist immer nur genau eine P-CSCF involviert, entweder befindet sie sich im Heimatnetz oder sie befindet sich im besuchten Netz. Im Wortlaut des Patentanspruches 1 ist das besuchte Netzwerk entweder ein gegenüber dem Heimatnetzwerk fremdes (Roaming Fall) oder das Heimatnetz, in dem ein Teilnehmer momentan eingebucht ist.
1. Vorteile des erfindungsgemässen Verfahrens und der besonderen Ausführungsformen aus technischer Sicht:
   Um Policy-Informationen zwischen dem Heimatnetz des Teilnehmers und dem Zugangsnetzwerk eines anderen Netzes austauschen zu können, müssen die Adressierung, das Routing, sowie die Sicherheit der übertragenen Nachrichten gewährleistet werden. Die benötigten Sicherheitsmechanismen beinhalten solche zur Authentifizierung, zum Integritätsschutz sowie zur Sicherstellung der Vertraulichkeit der übertragenen Daten. Der Vorteil der vorgeschlagenen Lösung besteht darin, daß die Adressierungs-, Routing- und Sicherheits-Infrastruktur, die für die SIP Sessionsteuerung im IMS aufgebaut wird, auch für den Austausch von Policy-Informationen zwischen den Netzwerken benutzt werden kann. Es ist also kein neues Interface erforderlich. Dies verringert die Kosten, da keine zweite Infrastruktur, mit neuen Netzknoten z.B. speziell für das Routing von Policy-Nachrichten entwickelt und aufgebaut werden muß. Die folgenden Mechanismen können dabei benutzt werden:
      Adressierung und Routing: um Policy-Informationen zwischen verschiedenen Netzwerken auszutauschen, können die SIP-Nachrichten, die ohnehin zwischen den Netzen ausgetauscht werden, als Transportmittel quasi «huckepack» mitgenutzt werden. Hier entsteht also keinerlei zusätzlicher Aufwand. Falls bei einer Erweiterung des erfindungsgemäßen Verfahrens auch Policy-Informationen während einer laufenden Session übertragen werden sollen, können die Routing Mechanismen, die bei der SIP Sessionsteuerung Verwendung finden, genutzt werden. Policy-tragende Nachrichten zwischen den Netzen werden dabei entlang des gleichen Weges geleitet wie die Nachrichten zur Sessionsteuerung. Policy-tragende Nachrichten können jedoch einen anderen Eintritts- oder Austrittspunkt haben, wie z.B. eben die P-CSCF des Heimatnetzes und die P-CSCF des Zugangsnetzes. Die P-CSCF des Nutzers kann mit den existierenden Routing Mechanismen gefunden werden, da sie sich im Pfad der Sessionsteuerung befindet. Dazu braucht dem dienstanbietenden Netz die Adresse der P-CSCF nicht zur Verfügung stehen.
      Sicherheitsmechanismen: um Policy-Informationen zwischen verschiedenen Netzen auszutauschen, können die gleichen Mechanismen, die bei der SIP Sessionsteuerung für die Authentifizierung, den Integritätsschutz und den Schutz der Vertraulichkeit Verwendung finden, genutzt werden.
      Datenhaltung: Die Policy-Informationen werden im erfindungsgemäßen Verfahren gemeinsam mit dem User Profile im HSS gespeichert und erfordern somit keine neue Datenbank oder sind auf einer Datenbank gespeichert, auf welche vom HSS aus zugegriffen werden kann.
2. Vorteile des erfindungsgemässen Verfahrens und der besonderen Ausführungsformen aus geschäftlicher Sicht:
   Hierbei wird angenommen, daß Netzwerkbetreiber untereinander Geschäftsbeziehungen (sogenannte Service Level Agreements) eingehen. Dies ist bei existierenden Netzwerkbetreibern üblich.
   Vorteile für den Netzwerkbetreiber: Der Operator hat nun die Möglichkeit, Netzwerkressourcen nicht mehr nur in Abhängigkeit vom Dienst, sondern auch in Abhängigkeit vom Nutzer zuzuweisen. Dies ermöglicht eine genauere Ausrichtung auf die Bedürfnisse der Nutzer, z.B. können nun - bei Nutzung der gleichen Dienste - Gelegenheitsnutzer anders mit Ressourcen versorgt werden als Business-Kunden. Der entscheiden Vorteil der hier vorgestellten Lösung ist, dass diese Zuweisung von Netzwerkressourcen auch im Falle von Roaming auf das besuchte Netzwerk übertragen werden kann.
   Vorteile für den Dienstnutzer: Der Kunde hat die Möglichkeit, je nach Anspruch, Notwendigkeit und finanziellen Überlegungen Dienste in verschiedener Güte zu nutzen. Das vorgeschlagene Verfahren eignet sich auch für eine Änderung einer bestimmten Policy, z.B. abhängig von der Tageszeit oder durch sessionabhängige Wahl durch den Teilnehmer.

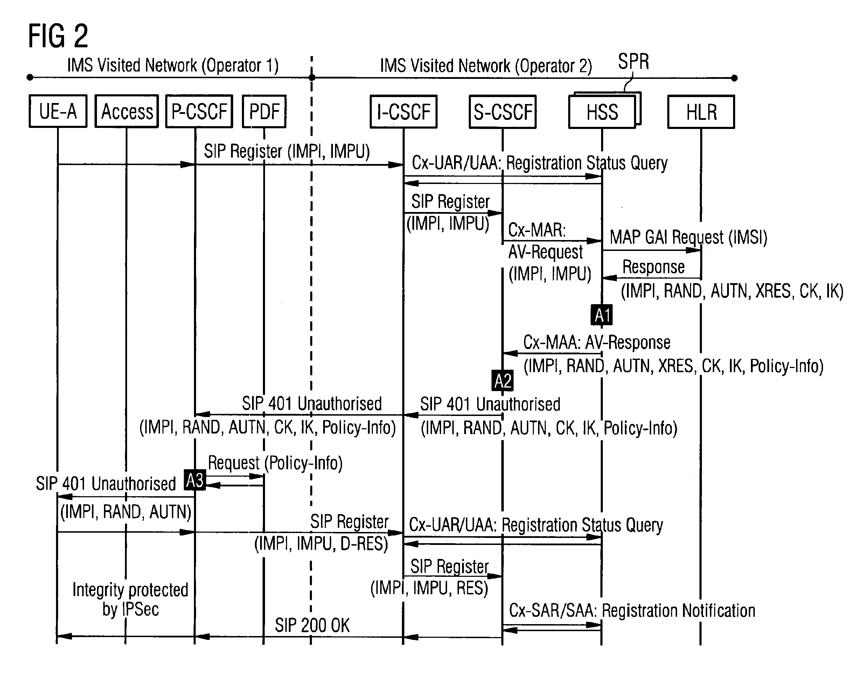

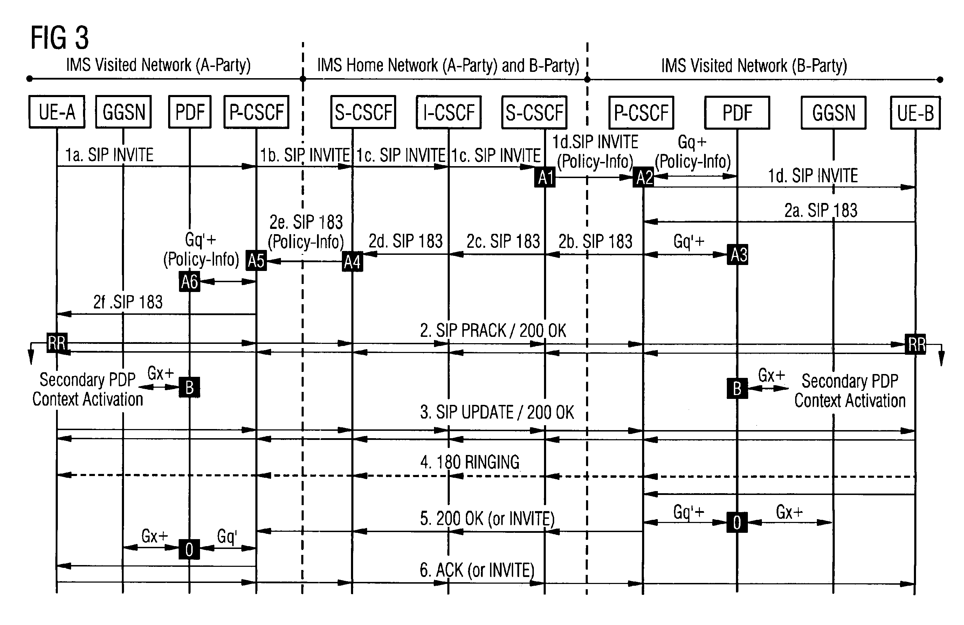

Ausführungsbeispiele der Erfindung werden nachfolgend anhand der Figuren 2 und 3 näher erläutert. Dabei zeigen:
- Figur 1: Vorschlag aus der Standardisierung zur Übertragung von teilnehmer-spezifischen Policy-Informationen zwischen Netzen;
- Figur 2: Übertragung der Policy-Informationen während der Registrierung;
- Figur 3: Übertragung der Policy-Informationen während des Session Aufbaus.

Als Voraussetzung des Verfahrens seien die IMS teilnehmer-spezifischen Übertragungseigenschaften - im folgenden der Einfachheit halber mit «Policies» abgekürzt im HSS user profile enthalten. Sie können entweder im HSS selber abgespeichert sein (d.h. das SPR ist co-located mit dem HSS) oder sind über das HSS vom SPR erreichbar.

Entsprechend dem 3GPP Standard werden die benutzerspezifischen Daten - im Fachterm «user profile data» genannt - eines Teilnehmers vom HSS über das Cx-Interface wie folgt auf eine S-CSCF geladen:
a) bei einer Registrierung im Netz,
b) wenn ein Call zur Default S-CSCF geroutet wird oder
c) im Rahmen eines subscriber profile data updates

Im erfindungsgemäßen Verfahren wird dieser standardisierte Datentransfer genutzt, um gleichzeitig die Policies des Teilnehmers auf die S-CSCF zu transferieren. Für diesen Transfer sind keine Änderungen am Standard oder an den Systemen erforderlich.
Kern des erfindungsgemäßen Verfahrens ist der Transfer der Policies durch das IMS und über Netzwerkgrenzen hinweg zu einem anderen IMS. Hierzu werden die Policies in den umlaufenden SIP-Nachrichtenverkehr integriert. Dies geschieht problemlos und auf diejenige Weise, die der Standard für den Transfer von neuen Informationen durch das Netz vorgesehen hat, nämlich durch die Definition eines neuen SIP-P-headers, welcher die Policies enthält, der in die SIP-Nachrichten eingefügt werden kann. Dieser ist im folgenden als «SIP P-com.Policies - Header» bezeichnet.

Nachdem die Policies auf der S-CSCF verfügbar sind -siehe dazu in Fig. 2 Punkt A2, in Fig. 3 nicht dargestellt - müssen sie als nächsten Schritt auf die P-CSCF und weiter zur PDF transportiert werden. Hierzu gibt es zwei prinzipielle Möglichkeiten:
1 Policy-Informationen werden während der Registrierung übertragen.
2 Policy-Informationen werden während des Sessionaufbaus übertragen.

### 1 Übertragung der Policy-Informationen während der Registrierung

Ein möglicher Ablauf (im folgenden auch Lösung 1 genannt) ist in Abbildung 2 beschrieben. Die S-CSCF - in Fig. 2 Punkt A2 - fügt einen die Policies enthaltenden «SIP P-com.Policies - Header» in eine SIP-Nachricht ein, die während der Registrierung von der S-CSCF an die P-CSCF gesendet wird. Alternativ kann die S-CSCF auch die Policies in einen schon vorhandenen SIP-Header einfügen. Dies kann z.B. die SIP 401 Unauthorized Nachricht sein. Die P-CSCF entfernt diesen «SIP P-com.Policies - Header» (so wie auch andere, nicht für den Nutzer bestimmte Header) aus der SIP Nachricht bevor sie sie an den Nutzer weiterleitet. Die P-CSCF wiederum leitet die Policy Informationen an die Policy Decision Function PDF weiter; in Fig. 2 Punkt A3. Hierzu ist eine Erweiterung des Gq-Interfaces nötig, z.B. die Definition einer neuen Nachricht, die unabhängig vom Session-Aufbau geschickt werden kann. Die Implementation dieses Verfahrens ist wenig aufwendig, da sie an die bekannten Muster anschließt: die Security-Parameter werden genauso von der S-CSCF auf die P-CSCF übertragen, und einige der Parameter werden ebenfalls aus der Nachricht entfernt, bevor die P-CSCF sie an das Endgerät bzw. Teilnehmer UE weiterleitet.

### 2 Übertragung der Policy-Informationen während einem Sessionaufbau

Ein möglicher Ablauf (im folgenden auch Lösung 2 genannt) ist in Figur 3 beschrieben. Die S-CSCF fügt einen «SIP P-com.Policies - Header» in eine SIP-Nachricht ein, die während des Sessionaufbaus von der S-CSCF an die P-CSCF gesendet wird, siehe in Fig. 3 Punkt A1, A4. Beispiele:
- auf der B-Seite die SIP-INVITE Nachricht A1 und
- auf der A-Seite die SIP 183 Session Progress A4 (für einen 3GPP Standard Sessionaufbau mit sogenannten QoS Preconditions and SBLP oder die SIP 200 OK Nachricht (für einen IETF-kompatiblen Sessionaufbau) sein. Die Policy Information wird nun mittels der Nachricht Service Authorization Request über das Gq-Interface auf die PDF übertragen, siehe in Fig. 3 Punkt A5 für den A-Teilnehmer und Punkt A2 für den B-Teilnehmer.

Ein Vorteil von Lösung 2 gegenüber Lösung 1 ist, dass die PDF die Policy Information nur für die Dauer einer Session, nicht für die Dauer einer Registrierung speichern muß. Ein Nachteil von Lösung 2 gegenüber Lösung 1 ist, dass die Policy Information bei jedem Sessionaufbau aufs neue transportiert werden muß.
Bei beiden Lösungen liegt nun die Policy-Information auf der PDF vor. Diese kann nun die Nutzung der Zugangsnetzwerkressourcen im Falle eines Festnetz- (z.B. DSL-), Mobilnetz-(z.B. GPRS, UMTS, mittels des Go bzw. Gx interfaces) oder Kabelnetzzugangs (mittels des pkt-mm2 interfaces) steuern.

Eine weitere Ausgestaltung des erfindungsgemäßen Verfahrens kann die Möglichkeit beinhalten, auch während einer laufenden Session die Policies zu ändern. Dies kann auf folgende Weise realisiert werden: Werden die Policy-Informationen geändert, so werden diese sofort über die Push Profile Request Nachricht vom HSS an die S-CSCF übertragen. Die S-CSCF kann eine an den Teilnehmer adressierte SIP INFO Nachricht, welche die aktualisierten Policy-Informationen enthält, senden, die auf Grund der Routing-Mechanismen des SIP-Protokolls über genau die gleichen Knoten geleitet wird wie die Nachrichten zum Session Aufbau. Dadurch erreicht die INFO Nachricht die zuständige P-CSCF, die die Nachricht untersucht. Wird die Nachricht als Policy-Informationen-Aktualisierung erkannt, wird sie terminiert und nicht an den Teilnehmer ausgeliefert. Mittels der in Lösung 1 erwähnten neuen Nachricht können nun die aktualisierten Policy-Informationen über das Gq-Interface an die PDF gesendet werden. Diese Änderung kann z.B. durch den Operator, Teilnehmer oder die Uhrzeit veranlasst werden.

Als Erweiterung des erfindungsgemäßen Verfahrens kann auch ein in einigen Netzkonfigurationen vorhandener Session Border Controller (SBC) zwischen der S-CSCF und der P-CSCF, über welchen die Signalisierungsnachrichten geroutet werden, die Policy-Informationen den SIP-Nachrichten entnehmen, speichern und zur Steuerung seiner Zugangsnetzressourcen einsetzen.
Dies ist kaum ein zusätzlicher Aufwand für den SBC, da er ohnehin auf Grund des Pinholings im Firewall, d.h. gezieltes temporäres Öffnen von Ports für den Datenverkehr, die SIP-Signalisierung analysieren muß.

Das erfindungsgemäße Verfahren macht folgende Erweiterungen gegenüber dem Standard notwendig:
- Die Existenz von subscriber-spezifischen (=teilnehmer-spezifischen) Policy Informationen, deren Speicherung im HSS oder deren Verfügbarkeit über das HSS.
- Die Einführung eines neuen «SIP P-com.Policies - Headers».
- Die Einfügung neuer Parameter in eine bereits existierende Nachricht auf dem Cx-Interface.
- Die Einfügung neuer Parameter in eine bereits existierende Nachricht auf dem Gq-Interface für die Lösung 2.
- Die Einführung einer neuen Nachricht auf dem Gq-Interface für die Lösung 1.

Alle weiteren Schritte sind bereits standardisiert und implementiert.

### Liste der verwendeten Akronyme; Glossar

- AF: Application Function
- CMTS: cable modem termination system
- CSCF: Call Session Control Function
- GGSN: Gateway GPRS Support Node
- GPRS: General Packet Radio Service
- HSS: Home Subscriber Server
- I-CSCF: Interrogating Call Session Control Function
- IMS: IP Multimedia Subsystem
- P-CSCF: Proxy-Call Session Control Function
- PCRF:
- PDF: Policy Decision Function
- PEF: Policy Enforcement Function
- SPR: Subscriber Policy Repository
- S-CSCF: Serving Call Session Control Function
- UE: User Equipment, Teilnehmer
- UE-A: rufender Teilnehmer
- UE-B: gerufener Teilnehmer
- UMTS: Universal Mobile Telecommunications System

### Literaturliste

[1] 3GPP TS 23.228 version 6.11.0 Release 6 ETSI TS 123 228
   Digital cellular telecommunications system (Phase 2+) ;
   Universal Mobile Telecommunications System (UMTS); IP Multimedia Subsystem (IMS);
[2] 3GPP TS 29.208 version 6.6.1 Release 6 ETSI TS 29.208
   Digital cellular telecommunications system (Phase 2+);
   Universal Mobile Telecommunications System (UMTS); End-to-end Quality of Service (QoS) signalling flows
[3] 3GPP TS 29.209 version 6.5.0 Release 6 TS 29.209
   Universal Mobile Telecommunications System (UMTS); Policy control over Gq interface

## Patentansprüche

1. Verfahren zur Vergabe von Übertragungseigenschaften für einen Teilnehmer (UE-A, UE-B) im Zugangsnetzwerk - im folgenden teilnehmerspezifische Policies oder kurz Policies genannt - in einem IP Multimedia Subsystem (IMS), wobei die Policies pro Teilnehmer (US-A, UE-B) in einer einem Heimatnetz zugeordneten Datenbank (SPR) gespeichert sind und wobei der Teilnehmer (UE-A, UE-B) im Heimatnetz oder in einem besuchten Netz einen Dienst mit einer zugesicherten Übertragungseigenschaft beanspruchen kann,
**dadurch gekennzeichnet, dass**
die teilnehmerspezifischen Policies im Home Subscriber Server (HSS) gespeichert oder diesem zugänglich sind und dass
i) beim Einbuchen eines Teilnehmers (UE-A, UE-B) in einem besuchten Netz
oder
ii) beim Verbindungsaufbau in einem besuchten Netz die Policies des vorgenannten Teilnehmers (UE-A, UE-B) zur P-CSCF im besuchten Netz übertragen werden und dass nach erfolgter Übertragung der teilnehmerspezifischen Policies diese zu einer Policy Decision Function (PDF) weitergeleitet werden, die für den vom Teilnehmer (UE-A, UE-B) beanspruchten Dienst Ressourcen des Zugangsnetzes bereit stellt.

2. Verfahren nach Anspruch 1,
**dadurch gekennzeichnet, dass**
die Policies vor Ausführung der Verfahrensschritte i) oder ii) von einer Subscriber Policy Repository (SPR) zum Home Subscriber Server übertragen worden sind.

3. Verfahren nach Anspruch 2,
**dadurch gekennzeichnet, dass**
die für die Übertragung der Policies diese in einen umlaufenden SIP-Nachrichtenverkehr integriert sind. die Übertragung der Policies in den umlaufenden SIP-Verkehr integriert ist.

4. Verfahren nach Anspruch 3,
**dadurch gekennzeichnet, dass** für den Fall i) ein die Policies enthaltender «SIP P-com.Policies - Header» in eine SIP-Nachricht eingefügt wird, die während der Registrierung von der S-CSCF (A2) an die P-CSCF (A3) gesendet wird.

5. Verfahren nach Anspruch 3,
**dadurch gekennzeichnet, dass** für den Fall i) die Policies in einen bereits existierenden SIP-Header eingefügt wird.

6. Verfahren nach Anspruch 4 oder 5,
**dadurch gekennzeichnet, dass**
die SIP-Nachricht eine «SIP 401 Unauthorised Nachricht» ist.

7. Verfahren nach Anspruch 3,
**dadurch gekennzeichnet, dass**
für den Fall ii) ein die Policies enthaltender «SIP P-com.Policies - Header» in eine SIP-Nachricht eingefügt wird, die während des Sessionaufbaus von der S-CSCF (A1) an die P-CSCF (A2) gesendet wird.

8. Verfahren nach Anspruch 7,
**dadurch gekennzeichnet, dass** für den Fall ii) die Policies in einen bereits existierenden SIP-Header eingefügt wird.

9. Verfahren nach Anspruch 7 oder 8,
**dadurch gekennzeichnet, dass**
die Policies von der P-CSCF an die Policy Decision Function (PDF) über ein Gq-Interface übertragen wird.

10. Verfahren nach einem der Ansprüche 7 bis 9,
**dadurch gekennzeichnet, dass**
für einen gerufenen Teilnehmer (UE-B) der «SIP P-com.Policies - Header» in eine SIP INVITE - Nachricht eingefügt wird.

11. Verfahren nach einem der Ansprüche 7 bis 10,
**dadurch gekennzeichnet, dass**
für einen rufenden Teilnehmer (UE-A) der «SIP P-com.Policies - Header» in eine SIP 183 SESSION PROGRESS - Nachricht eingefügt wird.

12. Verfahren nach einem der Ansprüche 1 bis 11,
**dadurch gekennzeichnet, dass**
die Policies während einer Session durch eine durch den Teilnehmer oder durch das Netz ausgelösten Aktion geändert werden und mit den genannten Nachrichten an die Policy Decision Function (PDF) übertragen werden.
